# EUROPÄISCHE PATENTSCHRIFT

(11) **EP 3 434 432 B1**
(45) Veröffentlichungstag und Bekanntmachung des Hinweises auf die Patenterteilung: **16.12.2020**
(21) Anmeldenummer: 18170353.9
(22) Anmeldetag: 02.05.2018
(51) Int. Cl.: B27B 19/00, B24B 23/03, B23Q 5/027, B23D 51/16, B24B 23/04, B24B 27/08, B24B 47/12

(54) **OSZILLIEREND ANGETRIEBENE WERKZEUGMASCHINE**
OSCILLATION DRIVEN MACHINE TOOL
MACHINE-OUTIL À ENTRAÎNEMENT OSCILLANT

(30) Priorität: 25.07.2017 DE 102017116823
(43) Veröffentlichungstag der Anmeldung: 30.01.2019
(73) Patentinhaber: C. & E. Fein GmbH, 73529 Schwäbisch Gmünd-Bargau (DE)
(72) Erfinder: Hess, Achim, 73529 Schwäbisch Gmünd-Bargau (DE); Bek, Fabian, 73529 Schwäbisch Gmünd-Bargau (DE)
(74) Vertreter: Roos, Michael

(56) Entgegenhaltungen:
- EP-A2- 1 882 538
- EP-A2- 2 886 271
- US-A- 3 554 197
- US-A1- 2011 011 605

## Beschreibung

Die Erfindung betrifft eine oszillierend angetriebene Werkzeugmaschine mit einem Gehäuse, in dem ein Motor mit einer Motorwelle aufgenommen ist, an der ein Exzenterelement aufgenommen ist, mit einer im Gehäuse um ihre Längsachse drehbar gelagerten Werkzeugspindel, an der ein Koppelelement drehfest aufgenommen ist, das mit dem Exzenterelement zur Erzeugung einer um ihre Längsachse oszillierenden Bewegung der Werkzeugspindel zusammenwirkt.

Derartige oszillierend angetriebene Werkzeugmaschinen, hier auch kurz als Oszillationsantriebe bezeichnet, setzen typischerweise die Exzenterbewegung des von der Motorspindel angetriebenen Exzenterelementes in eine Drehoszillationsbewegung des mit der Motorwelle fest verbundenen Koppelelementes um, das meist als Gabel ausgebildet ist, die ein balliges Lager umschließt, in dem das Exzenterelement aufgenommen ist.

Derartige Oszillationsantriebe sind üblicherweise dazu ausgebildet, ein Werkzeug mit einer hohen Oszillationsfrequenz, etwa im Bereich zwischen 5000 Oszillationen pro Minute und 30000 Oszillationen pro Minute bei geringem Verschwenkwinkel, etwa im Bereich zwischen 0,5° und 7° (gemessen von Umkehrpunkt zu Umkehrpunkt) anzutreiben. Hierdurch kann eine hochpräzise Bearbeitung von Werkstücken ermöglicht werden.

Das oszillierend angetriebene Werkzeug erzeugt bei der Bearbeitung von Werkstücken nur geringe Reaktionskräfte bzw. Gegenmomente, die ein den Oszillationsantrieb führender Bediener auffangen muss. Verglichen etwa mit rotatorisch angetriebenen Sägewerkzeugen, etwa Kreissägen, bergen oszillierend angetriebene Sägeblätter für den Benutzer eine signifikant geringere Verletzungsgefahr. Außerdem können mit länglichen Sägeblättern auch Tauchschnitte insbesondere in Werkstücken aus Holz, GFK, Gips oder dergleichen, eingebracht werden, was mit rotierend angetriebenen Werkzeugen nur bedingt möglich ist.

Aus der EP 2 886 271 A2, die die Merkmale des Oberbegriffs des Anspruchs 1 zeigt, ist eine oszillierend angetriebene Werkzeugmaschine bekannt, bei welcher der drehoszillierenden Antriebsbewegung des Oszillationsantriebes zusätzlich eine Bewegung, die senkrecht zur Längsachse der Werkzeugspindel gerichtet ist, überlagert wird. Zur Erzeugung der überlagerten Bewegung ist ein separater Antrieb vorgesehen, was zu einem hohen technischen Aufwand führt.

Aus der DE 10 2006 022 804 A1 ist eine weitere oszillierend angetriebene Werkzeugmaschine bekannt, bei welcher das Werkzeug zusätzlich zu seiner oszillierenden Bewegung um eine Schwenkachse verschwenkt wird, die sich entlang einer Bewegungsbahn hin und her bewegt. Hierzu ist ein separater Schubkurbelantrieb vorgesehen.

Auch hierbei ergibt sich ein aufwändiger Aufbau. Außerdem ist die zusätzlich überlagerte Pendel- oder Schwenkbewegung für Sägearbeiten eher nachteilig.

Aus der DE 10 2014 119 141 A1 ist eine weitere oszillierend antreibbare Werkzeugmaschine bekannt, bei welcher mindestens ein steuerbarer Aktor vorgesehen ist, um der Drehoszillationsbewegung der Werkzeugspindel zusätzlich wenigstens eine weitere Bewegungskomponente zu überlagern.

Auch hierbei führt der zusätzlich notwendige Antrieb, der in der Regel mehrere Aktoren erfordert, zu einer teuren und aufwändigen Konstruktion.

Vor diesem Hintergrund liegt der Erfindung die Aufgabe zugrunde, eine oszillierend angetriebene Werkzeugmaschine zu schaffen, bei welcher die Werkzeugspindel um ihre Längsachse oszillierend angetrieben wird und zusätzlich eine Bewegung überlagert werden kann, wobei der Aufbau möglichst einfach und robust sein soll.

Diese Aufgabe wird bei einer oszillierend angetriebenen Werkzeugmaschine gemäß der eingangs genannten Art dadurch gelöst, dass zur Einleitung einer zur oszillierenden Bewegung zusätzlichen, davon abweichenden, überlagerten Bewegung in das Koppelelement eine Kulissenführung vorgesehen ist, in der das Koppelelement zur Erzeugung der überlagerten Bewegung mittels eines Führungselementes geführt ist, oder dass das Exzenterelement als Kugelkopf ausgebildet ist, der in einer inneren Kulissenführung im Koppelelement geführt ist.

Die Aufgabe der Erfindung wird auf diese Weise gelöst.

Erfindungsgemäß wird die überlagerte Bewegung durch den Antrieb mit dem Exzenterelement erzeugt, ohne dass hierzu ein separater Antrieb erforderlich ist.

Da auf diese Weise ein zusätzlicher Antrieb zur Erzeugung der überlagerten Bewegung entfallen kann, ergibt sich eine deutlich vereinfachte Ausführung im Vergleich zu herkömmlichen Konstruktionen.

Gemäß einer weiteren Ausgestaltung der Erfindung ist die Werkzeugspindel im Gehäuse vorzugsweise im Bereich ihrer beiden Enden mittels zweier Lager drehbar gelagert und zusätzlich senkrecht zur Längsachse linear bewegbar gelagert.

Auf diese Weise kann in das Koppelelement eine Bewegung der Werkzeugspindel senkrecht zu ihrer Längsachse eingeleitet werden. Gemäß einer weiteren Ausgestaltung der Erfindung ist das Koppelelement ein Hebel, der zwischen beiden Lagern auf der Werkzeugspindel festgelegt ist.

Gemäß einer bevorzugten Ausführung der Erfindung ist das Koppelelement zur Erzeugung der überlagerten Bewegung mittels eines Führungselementes in einer Kulissenführung geführt.

Auf diese Weise wird dem Koppelelement eine durch die Bewegung des Führungselementes innerhalb der Kulissenführung erzeugte Bewegung aufgeprägt.

Durch eine Variation der Form der Kulissenführung lassen sich unterschiedliche Bewegungen realisieren.

Auch können durch einen Austausch der Kulissenführung an einer oszillierend angetriebenen Werkzeugmaschine einer vorgegebenen Konstruktion unterschiedliche überlagerte Bewegungen erzielt werden.

Die Kulissenführung ist vorzugsweise derart angeordnet und ausgebildet, dass sie bezüglich einer zwischen den beiden Umkehrpunkten des Koppelelementes durch die Längsachse der Werkzeugspindel verlaufenden Symmetrielinie symmetrisch ist.

Auf diese Weise weist die zusätzlich aufgeprägte Linearbewegung jeweils ausgehend von einer Mittellage der Oszillationsbewegung auf beiden Seiten eine gleiche Amplitude auf.

Eine derartige Ausführung ist besonders geeignet, wenn die Werkzeugmaschine etwa zum Antrieb eines Sägewerkzeuges benutzt wird.

Grundsätzlich sind natürlich auch davon abweichende Anordnungen denkbar, die nicht symmetrisch sind, um bestimmte Sonderanforderungen zu erfüllen.

Vorzugsweise ist die Kulissenführung auswechselbar angeordnet.

Auf diese Weise können unterschiedliche überlagerte Bewegungen erzeugt werden.

Auf dem Exzenterelement ist gemäß einer weiteren Ausgestaltung der Erfindung ein balliges Lager aufgenommen, das an seiner Außenseite in dem gabelförmig ausgebildeten Koppelelement gehalten ist.

Bei einer derartigen Ausführung entspricht die Gestaltung des Oszillationsantriebes selbst der aus dem Stand der Technik bekannten, üblichen Ausführung.

Gemäß einer weiteren Ausführung der Erfindung sind Mittel vorgesehen, um das Führungselement und die Kulissenführung zwischen einer Eingriffsposition, in der das Führungselement in der Kulissenführung zur Erzeugung einer überlagerten Bewegung geführt ist, und einer inaktiven Position zu bewegen, in der das Führungselement außer Eingriff von der Kulissenführung ist und ferner eine Linearbeweglichkeit blockiert ist.

Auf diese Weise kann die überlagerte Bewegung zu- bzw. abgeschaltet werden.

Hierzu kann etwa die Kulissenführung mittels eines Antriebs, z.B. mittels einer Gewindeschraube, derart verstellbar sein, dass das Führungselement außer Eingriff von der Kulissenführung kommt und somit keine zusätzliche Bewegung mehr auf die Oszillationsbewegung aufgeprägt wird. Hierbei sind ferner Mittel vorgesehen, um in der inaktiven Position der Kulissenführung die lineare Beweglichkeit der Werkzeugspindel zu blockieren, so dass die Werkzeugspindel in diesem Fall lediglich drehoszillierend angetrieben und beweglich ist.

Gemäß einer weiteren Ausführung der Erfindung sind Mittel vorgesehen, um das Führungselement mit unterschiedlichen Kulissenführungen oder mit unterschiedlichen Abschnitten einer Kulissenführung in Eingriff zu bringen, um unterschiedliche überlagerte Bewegungen zu erzeugen.

Hierdurch können unterschiedliche überlagerte Bewegungen realisiert werden oder eine überlagerte Bewegung ganz vermieden werden.

Gemäß einer weiteren Ausführung der Erfindung ist das Exzenterelement als Kugelkopf ausgebildet, der in einer inneren Kulissenführung im Koppelelement geführt ist.

Auf diese Weise wird auf das ballige Lager auf dem Exzenterelement und auf die externe Kulissenführung verzichtet und stattdessen wird der Exzenter als Kugelkopf ausgebildet, der unmittelbar in der inneren Kulissenführung im Koppelelement geführt ist.

Damit ergibt sich eine besonders einfache Konstruktion.

Da hierbei auch eine Bewegungskomponente in Axialrichtung erzeugt wird, ist es vorteilhaft, hierbei die Motorwelle zusätzlich gegen eine Verschiebung in Axialrichtung zu sichern. Ferner ist es sinnvoll, dass hierzu das vordere Ankerlager in beiden axialen Richtungen gehalten wird.

Gemäß einer weiteren Ausgestaltung der Erfindung steht die Werkzeugspindel aus dem Gehäuse nach außen hervor und ist im Bereich ihrer Austrittsstelle aus dem Gehäuse mit einer Membran aus einem elastomeren Werkstoff abgedichtet.

Auf diese Weise kann eine sichere Abdichtung der Werkzeugspindel nach außen gewährleistet werden, obwohl die Werkzeugspindel nicht nur eine Drehoszillationsbewegung, sondern auch eine Bewegung senkrecht zu ihrer Längsachse ausführt.

Gemäß einer weiteren Ausgestaltung der Erfindung ist die Kulissenführung derart ausgebildet, dass die senkrecht zur Längsachse der Werkzeugspindel überlagerte, lineare Bewegung eine maximale Auslenkung hat, wenn sich das Koppelelement in Mittelposition zwischen den beiden Umkehrpunkten der Oszillationsbewegung befindet.

Es hat sich gezeigt, dass eine derartige Ausgestaltung besonders geeignet ist, wenn die Werkzeugmaschine zum Sägen verwendet wird. Auf diese Weise lässt sich ein sehr guter Arbeitsfortschritt bei minimaler Vorschubkraft erzeugen.

Gemäß einer weiteren Ausgestaltung der Erfindung weist die Werkzeugspindel an ihrem freien Ende eine Werkzeugaufnahme zum Befestigen eines Werkzeugs, insbesondere eines Säge- oder Schleifwerkzeuges, auf.

Es kann sich hierbei um beliebige im Stand der Technik bekannte Schnittstellen zwischen Werkzeug und Werkzeugspindel handeln, welche vorzugsweise eine form- und/oder kraftschlüssige Befestigung des Werkzeuges auf der Werkzeugspindel gewährleisten. Insbesondere kann auch eine Werkzeugaufnahme mit einer dreidimensionalen Gestaltung vorgesehen sein, wie etwa aus der deutschen Gebrauchsmusterschrift DE 202013006900 U1 bekannt, die hier vollständig durch Bezugnahme eingeschlossen wird.

Gemäß einer weiteren Ausgestaltung der Erfindung ist eine Steuerung vorgesehen, die mit dem Motor derart gekoppelt ist, dass eine Steuerung der Motordrehzahl in Abhängigkeit von einem oder mehreren vorbestimmten Parametern erfolgt.

Hierbei können etwa Mittel zur Erfassung der Drehzahl des Motors vorgesehen sein und die Steuerung zum Anlauf des Motors mit einer ersten Drehzahl und zur Erhöhung der Drehzahl auf eine zweite Drehzahl ausgebildet sein, die höher als die erste Drehzahl ist, wenn eine Belastung des Motors erkannt wird.

Auf diese Weise kann eine sogenannte Leerlaufabsenkung realisiert werden, wodurch zunächst bei einem Sägevorgang mit einer niedrigen Drehzahl ein Schnittansatz an einem Werkstück erzeugt wird und anschließend die Drehzahl erhöht wird, ohne dass die Kontrolle über den Schnitt verloren geht, da das Sägeblatt in dem bereits erzeugten Schnitt geführt wird.

Auf diese Weise kann ein sehr schneller Arbeitsfortschritt erzielt werden, ohne dass eine Gefahr durch ein Weglaufen des Werkzeugs besteht.

Hierbei kann die zweite (erhöhte) Drehzahl vorgegeben sein oder etwa in Abhängigkeit von einem bestimmten Werkzeug bis hin zu einer maximalen Drehzahl einstellbar sein.

Die Steuerung kann dabei derart ausgebildet sein, dass dann, wenn ein Absinken der Belastung erkannt wird, auch die Drehzahl des Motors abgesenkt wird, ggf. bis die erste Drehzahl wieder erreicht ist.

Es versteht sich, dass die vorstehend genannten und die nachstehend noch zu erläuternden Merkmale der Erfindung nicht nur in der jeweils angegebenen Kombination, sondern auch in anderen Kombinationen oder in Alleinstellung verwendbar sind, ohne den Rahmen der Erfindung zu verlassen.

Weitere Merkmale und Vorteile der Erfindung ergeben sich aus der nachfolgenden Beschreibung bevorzugter Ausführungsbeispiele unter Bezugnahme auf die Zeichnung. Es zeigen:
- Fig. 1: eine perspektivische Gesamtansicht einer erfindungsgemäßen Werkzeugmaschine;
- Fig. 2: einen Teilschnitt durch die Werkzeugmaschine gemäß Fig. 1 durch den Spindelkopf und durch einen Teil des Motors;
- Fig. 3: einen Schnitt durch die Werkzeugmaschine gemäß Fig. 2 längs der Linie III-III;
- Fig. 4: eine teilweise freigeschnittene perspektivische Darstellung, in der insbesondere das Koppelelement mit dem darin geführten balligen Lager und dem Führungselement gemäß der Kulissenführung erkennbar ist;
- Fig. 5: eine vergrößerte Darstellung gemäß Fig. 4, die noch weiter freigeschnitten ist, um den Oszillationsantrieb besser sichtbar zu machen;

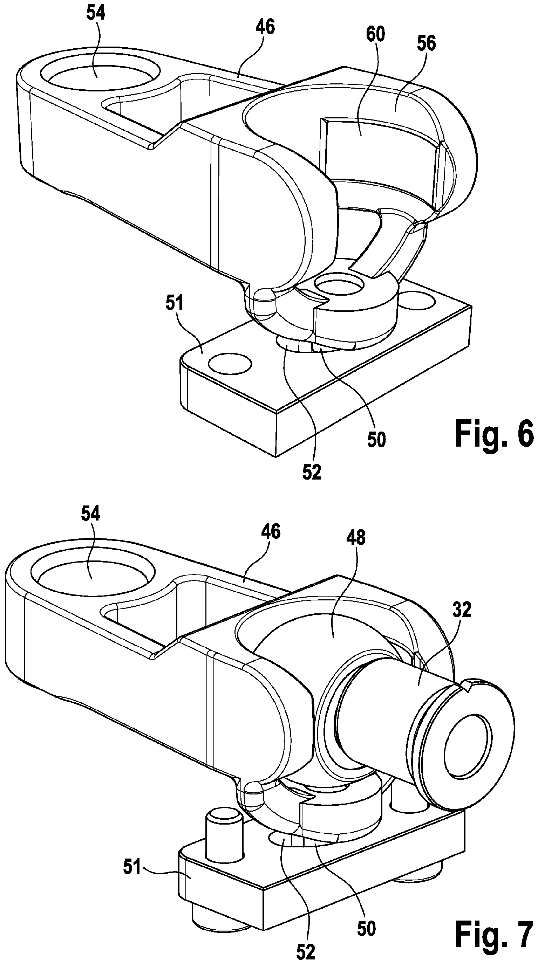

- Fig. 6: eine Ansicht des Koppelelementes gemäß Fig. 5 von der gabelförmigen Aufnahme für das ballige Lager aus gesehen, nebst zugehöriger Kulissenführung;
- Fig. 7: eine Darstellung des Koppelelementes nebst zugehöriger Kulissenführung, wobei zusätzlich das ballige Lager nebst dem darin aufgenommenen Exzenterelement erkennbar ist;
- Fig. 8: eine Darstellung einer alternativen Ausführung der Erfindung, wobei das Exzenterelement an seinem Ende als Kugelkopf ausgebildet ist, der in einer inneren Kulissenführung am Ende des Koppelelementes geführt ist;
- Fig. 9: das Koppelelement gemäß Fig. 8, jedoch ohne den Exzenterkopf;
- Fig. 10: eine beispielhafte Darstellung eines Sägewerkzeuges, welches auf dem äußeren Ende der Werkzeugspindel befestigt werden kann;
- Fig. 11: ein vereinfachtes Schaltschema zur Veranschaulichung der Leerlaufabsenkung des Motors;
- Fig. 12: eine schematische Darstellung, in welcher die symmetrische Anordnung der Kulissenführung im Hinblick auf eine Symmetrielinie zwischen den beiden Umkehrpunkten des Koppelelementes gezeigt ist;
- Fig. 13: eine weitere Abwandlung einer erfindungsgemäßen Werkzeugmaschine, wobei hier nur eine abgewandelte Kulissenführung in perspektivischer Darstellung gezeigt ist;
- Fig. 14: einen Schnitt durch eine weitere Abwandlung einer erfindungsgemäßen Werkzeugmaschine im Bereich der Gabel;
- Fig. 15: eine perspektivische Ansicht der zugehörigen Kulissenführungen von oben und
- Fig. 16: eine perspektivische Ansicht der zugehörigen Kulissenführungen von unten.

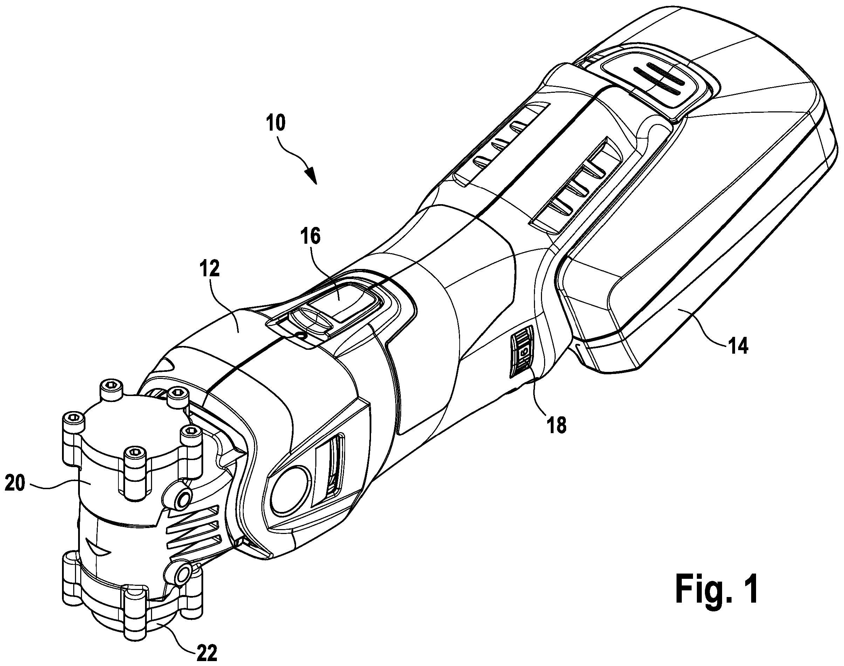

In Fig. 1 ist eine erfindungsgemäße Werkzeugmaschine in Form eines Handwerkzeuges dargestellt, die insgesamt mit der Ziffer 10 bezeichnet ist. Die Werkzeugmaschine 10 weist ein längliches Gehäuse 12 auf, das mit einer Hand umgriffen werden kann und an dessen Oberseite ein Schalter 16 zum Ein- und Ausschalten vorgesehen ist.

Am vorderen Ende des Gehäuses 12 ist ein Spindelkopf 20 angeformt, aus dem eine Werkzeugspindel 22 mit einem freien Ende nach unten hervorsteht. Am hinteren, dem Spindelkopf 20 abgewandten Ende ist ein auswechselbarer Akkupack 14 zur Spannungsversorgung der Maschine vorgesehen. Es versteht sich, dass natürlich stattdessen eine netzgebundene Ausführung verwendet werden könnte.

An der linken Seite ist zusätzlich noch ein Stellrad 18 erkennbar, das zur Einstellung der maximalen Drehzahl des Antriebsmotors ausgebildet ist.

Der nähere Aufbau der Werkzeugmaschine 10 wird nunmehr anhand der nachfolgenden Figuren beschrieben.

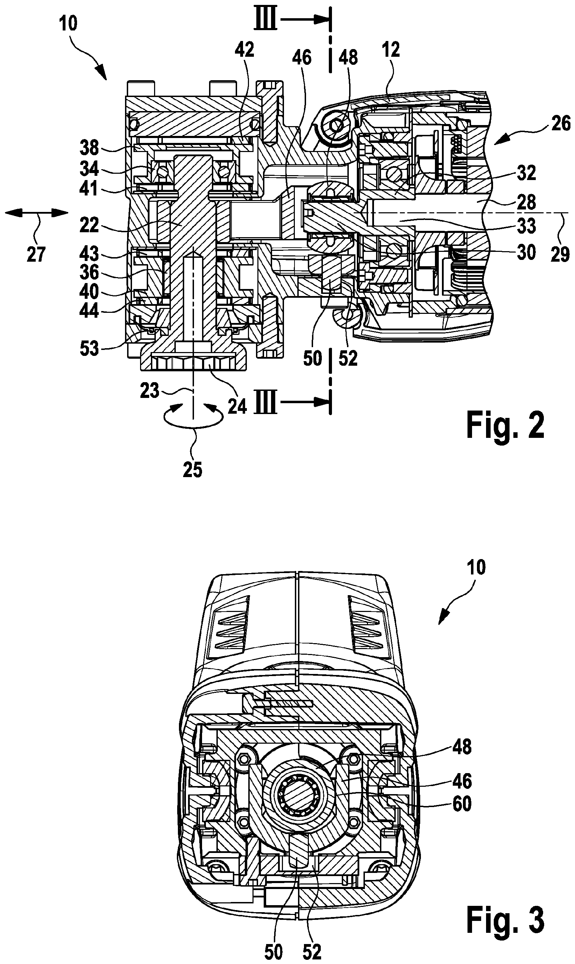

Fig. 2 zeigt einen Längsschnitt durch das äußere Ende der Maschine 10.

In dem Gehäuse 12 ist ein Motor 26 aufgenommen, auf dessen Motorwelle 28 am äußeren Ende 33 ein Exzenterelement in Form eines Exzenterstiftes mit einem daran angeformten hohlzylindrischen Fortsatz 32 über eine Presspassung befestigt ist. Die Motorwelle 28 ist mit dem Außenumfang des Fortsatzes 32 in einem Kugellager gelagert.

Im Spindelkopf 20 ist die Werkzeugspindel 22 mit ihrer Längsachse 23 rechtwinklig zur Längsachse 29 der Motorwelle gehalten. Die Werkzeugspindel ist im Bereich ihrer beiden Enden mittels zweier Lager 34, 36 drehbar gelagert. Zusätzlich ist die Werkzeugspindel 22 in einer Richtung senkrecht zu ihrer Längsachse 23 und parallel zur Längsachse 29 der Motorwelle 28 bewegbar gelagert. Hierzu ist das eine Lager 34 am inneren Ende der Werkzeugspindel 22 in einem Lagerbock 38 gehalten, der mittels zweier Axialnadellager 41, 42 und zweier (nicht dargestellter) Linearführungen gelagert und in einer Richtung parallel zur Längsachse 29 der Motorwelle 28 verschiebbar ist. In entsprechender Weise ist das andere, als Nadellager 36 ausgeführte Lager in einem Lagerbock 40 gehalten, der mittels zweier Axialnadellager 43, 44 und zweier (nicht dargestellter) Linearführungen gelagert und in der Richtung senkrecht zur Längsachse 23 der Werkzeugspindel und parallel zur Längsachse 29 der Motorwelle 28 bewegbar ist.

Die Werkzeugspindel 22 kann somit um ihre Längsachse 23 drehoszillierend angetrieben werden (vgl. Doppelpfeil 25) und zusätzlich in der Richtung senkrecht zu ihrer Längsachse 23 und parallel zur Längsachse 29 der Motorwelle 28 bewegt werden (vgl. Doppelpfeil 27).

Zur Erzeugung der drehoszillierenden und überlagerten linearen Bewegung ist ein Koppelelement 46 in Form eines Hebels mit einem Ende mittels einer Presspassung drehfest auf der Werkzeugspindel 22 zwischen den beiden Lagern 34, 36 gehalten.

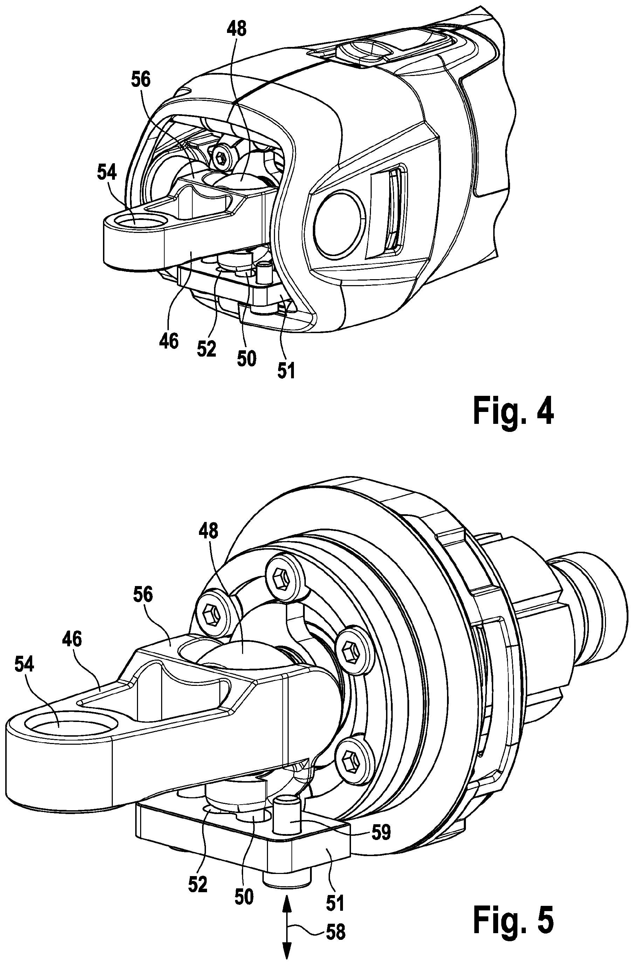

Das Koppelelement 46, dessen Form insbesondere aus den Fig. 4 und 5 näher ersichtlich ist, weist an einem Ende eine zylindrische Öffnung 54 auf (Fig. 4, 5), die eine Verbindung mit der Werkzeugspindel 22 durch eine Presspassung erlaubt. Das gegenüberliegende zweite Ende ist in Form einer Gabel 56 ausgeführt. An der einen Seite dieser Gabel (Unterseite) ist diese Gabel 56 nach unten hin verlängert und weist gemäß Fig. 3 einen U-förmigen Querschnitt auf. Auf dem Exzenter 33 ist ein balliges Lager 48 gehalten, das in einer Sitzfläche 60 einer Innenseite der Gabel 56 aufgenommen ist.

Unterhalb der Gabel 56 ist ein Block 51 mit einer Kulissenführung 52 am Gehäuse 12 gehalten, in die ein Führungselement 50 in Form eines Stiftes, der aus dem unteren Ende der Gabel 56 nach unten hervorsteht, eingreift.

Wird der Exzenter 33 von der Motorwelle 28 angetrieben, so wird einerseits über das ballige Lager 48 und das Koppelelement 46 eine drehoszillierende Bewegung der Werkzeugspindel 22 um ihre Längsachse 23 erzeugt (vgl. Doppelpfeil 25). Andererseits wird durch das Eingreifen des Führungselementes 50, das mit der Gabel 56 fest verbunden ist, in die Kulissenführung 52 eine überlagerte oszillierende Linearbewegung (Doppelpfeil 27) auf die Werkzeugspindel 22 erzeugt, und zwar senkrecht zu ihrer Längsachse 23 und parallel zur Längsachse 29 der Motorwelle 28.

Durch die Anordnung und Form der Kulissenführung 52 kann der Bewegungsablauf der überlagerten oszillierenden Linearbewegung beeinflusst werden.

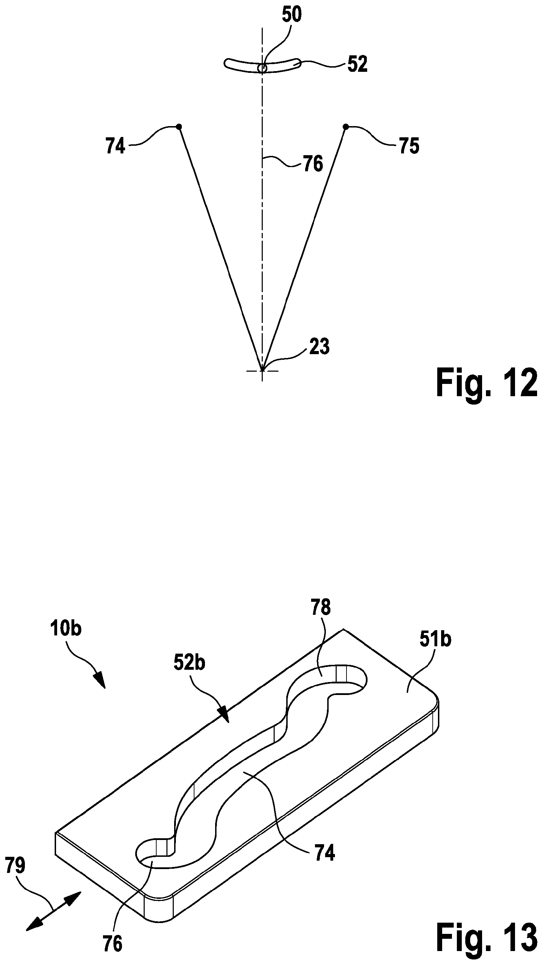

Gemäß einer bevorzugten Ausführungsform der Erfindung ist die Kulissenführung 52 derart angeordnet und ausgebildet, dass sie bezüglich einer zwischen den beiden Umkehrpunkten 74, 75 des Koppelelementes 46 durch die Längsachse 23 der Werkzeugspindel 22 verlaufenden Symmetrielinie 76 symmetrisch ist (vgl. Fig. 12). In Fig. 12 ist der Winkel zwischen den beiden Umkehrpunkten (der zwischen 0,5° und 7° liegt) zwecks besserer Erkennbarkeit deutlich überhöht dargestellt.

In diesem Fall weist die durch die Kulissenführung 52 erzeugte Linearbewegung bei gleicher Entfernung zu dem jeweiligen Umkehrpunkt 74, 75 der Oszillationsbewegung auf beiden Seiten jeweils einen gleichen Hub auf.

Eine derartige Ausgestaltung ist vorteilhaft, wenn die Werkzeugmaschine zum Antrieb eines Sägewerkzeuges verwendet werden soll.

Hierzu ist vorzugsweise ferner die Kulissenführung 52 derart ausgebildet, dass die senkrecht zur Längsachse 23 der Werkzeugspindel 22 überlagerte lineare Bewegung eine maximale Auslenkung hat, wenn sich das Koppelelement 46 in einer Mittelposition zwischen seinen beiden Umkehrpunkten 74, 75 befindet.

Es hat sich gezeigt, dass eine derartige Ausgestaltung besonders geeignet ist, um bei Sägearbeiten einen sehr guten Arbeitsfortschritt mit minimaler Vorschubkraft zu erzeugen.

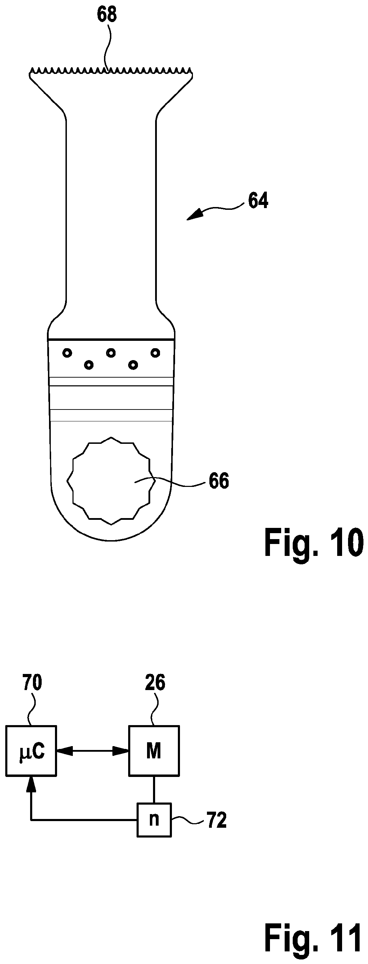

In Fig. 10 ist ein beispielhaftes Werkzeug 64 in der Aufsicht dargestellt, das als ein Sägewerkzeug verwendet werden kann. Es weist eine mit Sägezähnen versehene Schneide 68 auf, die konzentrisch zu einer Befestigungsöffnung 66 zur Festlegung des Werkzeugs 64 an der Werkzeugaufnahme 24 auf dem äußeren Ende der Werkzeugspindel 22 verläuft.

Es versteht sich, dass die Form der Befestigungsöffnung 66, die hier lediglich beispielhaft mehrkantförmig dargestellt ist, in geeigneter Weise an die Form der zugeordneten Aufnahme 24 an der Werkzeugspindel 22 angepasst ist. In der dargestellten Ausführung wird zur Befestigung des Werkzeugs 64 zusätzlich ein Befestigungselement verwendet, das durch die Befestigungsöffnung 66 des Werkzeugs 64 hindurch greift und in der Werkzeugspindel festgelegt wird, um eine form- und/oder kraftschlüssige Verbindung zu gewährleisten. Da die Einzelheiten einer derartigen Befestigung jedoch bekannt sind, sei auf die nähere Darstellung an dieser Stelle verzichtet.

Wie in Fig. 5 beispielhaft durch einen Doppelpfeil 58 angedeutet, ist es möglich, etwa durch eine Bewegung des Blocks 51, in dem die Kulissenführung 52 ausgebildet ist, die Kulissenführung 52 zwischen der in Fig. 5 dargestellten Eingriffsposition, in der das Führungselement 50 in die Kulissenführung 52 eingreift, und einer inaktiven Position zu verschieben.

In der inaktiven Position ist der Block 51 so weit von dem Führungselement 50 weg bewegt, dass das Führungselement 50 nicht mehr in die Kulissenführung 52 eingreift. In dieser Stellung wird also lediglich die Drehoszillationsbewegung auf die Werkzeugspindel 22 übertragen, nicht jedoch eine zusätzliche Linearbewegung.

Eine derartige Bewegung kann beispielsweise erzeugt werden, indem die in Fig. 5 erkennbare Befestigungsschraube 59 durch eine Gewindespindel ersetzt wird, die mit einem Gewinde im Block 51 kämmt und somit eine Verstellung in Richtung des Doppelpfeils 58 erlaubt. Hierbei sind ferner Mittel (nicht dargestellt) vorgesehen, um in der inaktiven Position der Kulissenführung die lineare Beweglichkeit der Werkzeugspindel zu blockieren, so dass die Werkzeugspindel in diesem Fall lediglich drehoszillierend angetrieben und beweglich ist.

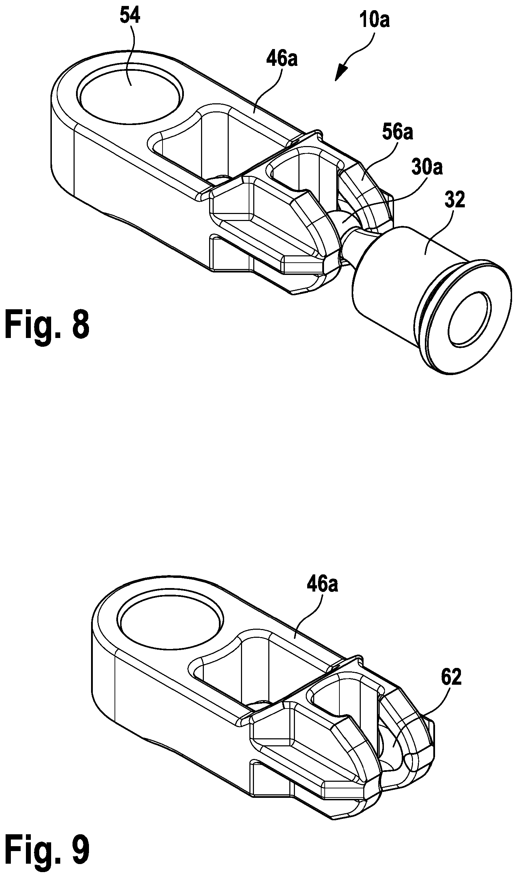

Die Fig. 8 und 9 zeigen eine abgewandelte Ausführung der Erfindung, bei der anstelle der Kulissenführung 52, die mit dem Führungselement 50 zusammenwirkt, eine Verbindung unmittelbar zwischen dem Exzenter und dem Koppelelement im Bereich der Gabel vorgesehen ist.

Hierzu ist der Exzenter 30a an seinem äußeren Ende als Kugelkopf ausgebildet, der in eine innere Kulissenführung 62 (vgl. Fig. 9) am Ende des Koppelelementes 46a im Bereich der Gabel 56a eingreift. Durch die Form der inneren Kulissenführung 62 in Verbindung mit dem Kugelkopf 30a des Exzenters ist die Bewegung fest vorgegeben. Die Bewegungskurve kann durch die Ausgestaltung der inneren Kulissenführung 52 angepasst werden.

Wie aus Fig. 2 ersichtlich, ist die Werkzeugspindel 22 an ihrem äußeren Ende durch eine Membran 53 aus einem elastomeren Werkstoff abgedichtet, da sich die Werkzeugspindel 22 zusätzlich auch linear oszillierend bewegt.

Um eine Durchführung von Sägearbeiten zu unterstützen, ist die Werkzeugmaschine 10 bevorzugt zusätzlich mit einer sogenannten Leerlaufabsenkung ausgestaltet.

Eine zentrale Steuerung 70, welche schematisch in Fig. 11 dargestellt ist und welche mit dem Motor 26 zusammenwirkt, ist derart ausgestaltet, dass das Werkzeug 64 zu Beginn eines Sägeschnittes mit einer geringen Drehzahl n₁ betrieben wird, wodurch sich das Werkzeug 64 sehr gut führen lässt. Erkennt die mit dem Motor 26 gekoppelte Steuerung 70, dass der Motor 26 belastet wird, so wird die Drehzahl langsam auf eine höhere Drehzahl n₂ gesteigert, bis ggf. eine voreingestellte maximale Drehzahl erreicht wird.

Dadurch kann ein sehr schneller Arbeitsfortschritt erzielt werden, ohne dass die Kontrolle über den Schnitt verloren geht, da das Sägeblatt in dem bereits erzeugten Schnitt geführt wird. Geht die Belastung der Maschine wieder zurück, so wird die Drehzahl wieder abgesenkt, bis schließlich das niedrigere Niveau n₁ wieder erreicht ist.

In Fig. 13 ist eine weitere Abwandlung einer erfindungsgemäßen Werkzeugmaschine insgesamt mit 10b bezeichnet. Dargestellt ist nur ein Block 51b mit einer Kulissenführung 52b mit einem mittleren Bereich 74 und einem ersten Endbereich 76 und einem zweiten Endbereich 78. Der Block 51b ist in Richtung seiner Längserstreckung verschiebbar, wie durch einen Doppelpfeil 79 angedeutet ist.

Dadurch kann entweder der mittlere Bereich 74 oder einer der beiden Endbereiche 76, 78 zum Eingriff mit dem zugeordneten Führungselement 50 gebracht werden, um so unterschiedliche überlagerte Bewegungen zu erzeugen. Soweit gewünscht, kann der mittlere Bereich 74 auch dazu genutzt werden, gar keine überlagerte Bewegung zu erzeugen.

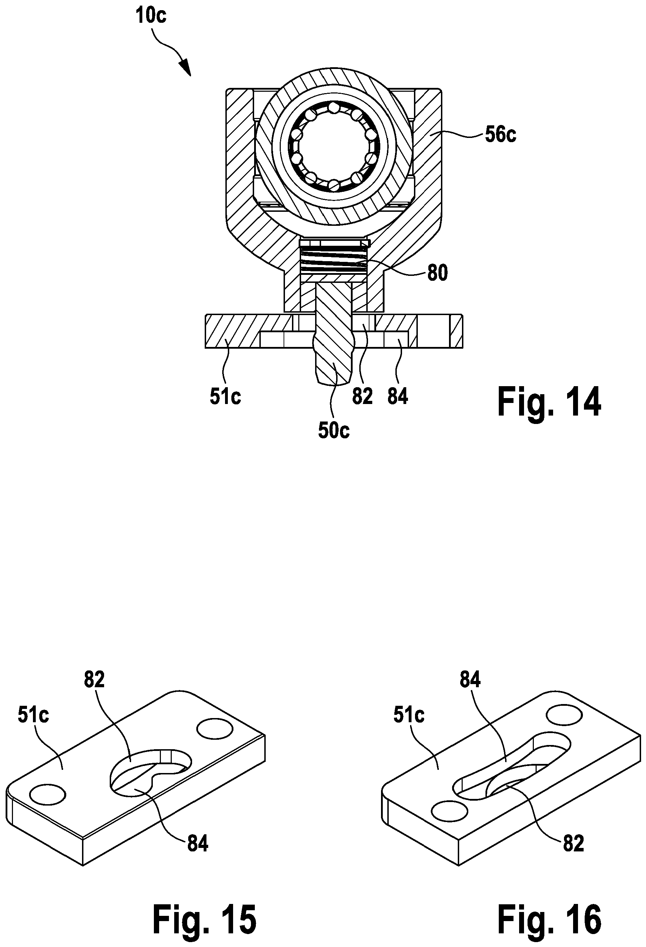

Die Fig. 14 bis 16 zeigen eine weitere Abwandlung der erfindungsgemäßen Werkzeugmaschine, die insgesamt mit 10c bezeichnet ist. Aus dem Schnitt gemäß Fig. 14 ist zu erkennen, dass im unteren Ende der Gabel 56c ein Führungselement 50c in Form eines Stößels gegen die Kraft eines Federelementes 80 axial verschieblich gehalten ist. Das Führungselement 50c kann entweder mit einer oberen Führungskulisse 82 in Eingriff gebracht werden oder mit einer an der Unterseite des Blocks 51c vorgesehenen unteren Führungskulisse 84. Es ergeben sich somit unterschiedliche überlagerte Bewegungen, je nachdem, ob die obere Führungskulisse 82 oder die untere Führungskulisse 84 im Eingriff ist.

## Patentansprüche

1. Oszillierend angetriebene Werkzeugmaschine mit einem Gehäuse (12), in dem ein Motor (26) mit einer Motorwelle (28) aufgenommen ist, an der ein Exzenterelement (30, 30a) aufgenommen ist, mit einem Spindelkopf (20), mit einer im Spindelkopf (20) um ihre Längsachse (23) drehbar gelagerten Werkzeugspindel (22), an der ein Koppelelement (46, 46a) drehfest aufgenommen ist, das mit dem Exzenterelement (30, 30a) zur Erzeugung einer um ihre Längsachse (23) oszillierenden Bewegung der Werkzeugspindel (22) zusammenwirkt, **dadurch gekennzeichnet, dass** zur Einleitung einer zur oszillierenden Bewegung zusätzlichen, davon abweichenden, überlagerten Bewegung in das Koppelelement (46, 46a) eine Kulissenführung (52, 52b, 82, 84) vorgesehen ist, in der das Koppelelement (46) zur Erzeugung der überlagerten Bewegung mittels eines Führungselementes (50, 50c) geführt ist, oder dass das Exzenterelement als Kugelkopf (30a) ausgebildet ist, der in einer inneren Kulissenführung (62) im Koppelelement (46a) geführt ist.

2. Werkzeugmaschine nach Anspruch 1, bei der die Werkzeugspindel (22) im Gehäuse (12) vorzugsweise im Bereich ihrer beiden Enden mittels zweier Lager (34, 36) drehbar gelagert ist und zusätzlich senkrecht zur Längsachse (23) linear bewegbar gelagert ist.

3. Werkzeugmaschine nach Anspruch 1, bei der das Koppelelement (46, 46a) ein Hebel ist, der zwischen den beiden Lagern (34, 36) auf der Werkzeugspindel (22) festgelegt ist.

4. Werkzeugmaschine nach einem der vorhergehenden Ansprüche, bei der die Kulissenführung (52, 82, 84) derart angeordnet und ausgebildet ist, dass sie bezüglich einer zwischen den beiden Umkehrpunkten (74, 75) des Koppelelementes (46) durch die Längsachse (23) der Werkzeugspindel (22) verlaufenden Symmetrielinie (76) symmetrisch ist.

5. Werkzeugmaschine nach einem der vorhergehenden Ansprüche, bei der die Kulissenführung (52) auswechselbar angeordnet ist.

6. Werkzeugmaschine nach einem der vorhergehenden Ansprüche, bei der auf dem Exzenterelement (30) ein balliges Lager (48) aufgenommen ist, das an seiner Außenseite in dem gabelförmig ausgebildeten Koppelelement (46) gehalten ist.

7. Werkzeugmaschine nach einem der vorhergehenden Ansprüche, bei der Mittel (59) vorgesehen sind, um das Führungselement (50) und die Kulissenführung (52) zwischen einer Eingriffsposition, in der das Führungselement (50) in der Kulissenführung (52) zur Erzeugung der überlagerten Bewegung geführt ist, und einer inaktiven Position zu bewegen, in der das Führungselement (50) außer Eingriff von der Kulissenführung (52) ist und ferner eine Linearbeweglichkeit blockiert ist.

8. Werkzeugmaschine nach einem der vorhergehenden Ansprüche, bei der Mittel (80) vorgesehen sind, um das Führungselement (50, 50c) mit unterschiedlichen Kulissenführungen (82, 84) oder mit unterschiedlichen Abschnitten (74, 76, 78) einer Kulissenführung (52b) in Eingriff zu bringen, um unterschiedliche überlagerte Bewegungen zu erzeugen.

9. Werkzeugmaschine nach Anspruch 7 oder 8, bei der die Kulissenführung (52b) entlang ihrer Erstreckungsrichtung verschiebbar ist.

10. Werkzeugmaschine nach einem der vorhergehenden Ansprüche, bei dem die Werkzeugspindel (22) gegen eine Verschiebung in Axialrichtung gesichert ist.

11. Werkzeugmaschine nach einem der vorhergehenden Ansprüche, bei dem die Werkzeugspindel (22) aus dem Gehäuse (12) nach außen hervorsteht und im Bereich ihrer Austrittsstelle aus dem Gehäuse mit einer Membran (53) aus einem elastomeren Werkstoff abgedichtet ist.

12. Werkzeugmaschine nach einem der vorhergehenden Ansprüche, bei dem die Kulissenführung (52, 52b, 62, 82, 84) derart ausgebildet ist, dass die senkrecht zur Längsachse (23) der Werkzeugspindel (22) überlagerte, lineare Bewegung eine maximale Auslenkung hat, wenn sich das Koppelelement (46, 46a) in einer Mittelposition zwischen den beiden Umkehrpunkten (74, 75) der Oszillationsbewegung befindet.

13. Werkzeugmaschine nach einem der vorhergehenden Ansprüche, bei der die Werkzeugspindel (22) an ihrem freien Ende eine Werkzeugaufnahme (24) zur Befestigung eines Werkzeuges (64), insbesondere eine Sägeoder Schleifwerkzeuges, aufweist.

## Claims

1. Oscillation driven machine tool comprising a housing (12) in which a motor (26) with a motor shaft (28) is accommodated, on which an eccentric element (30, 30a) is mounted, with a spindle head (20), with a tool spindle (22) rotatably mounted about its longitudinal axis (23) in the spindle head (20), on which tool spindle a coupling element (46, 46a) is mounted in a non-rotatable manner which cooperates with the eccentric element (30, 30a) for generating an oscillating movement of the tool spindle (22) about its longitudinal axis (23), **characterised in that** for introducing an superimposed movement into the coupling element (46, 46a) in addition to the oscillating movement and differing from the latter, a slotted guide (52, 52b, 82, 84) is provided in which the coupling element (46) is guided for generating the superimposed movement by means of a guide element (50, 50c), or **in that** the eccentric element is designed as a spherical head (30a) which is guided in an inner slotted guide (62) in the coupling element (46a).

2. Machine tool according to claim 1, wherein the tool spindle (22) is rotatably mounted in the housing (12) preferably in the region of both its ends by means of two bearings (34, 36), and is also mounted to be linearly movable perpendicular to the longitudinal axis (23).

3. Machine tool according to claim 1, wherein the coupling element (46, 46a) is a lever, which is fixed between the two bearings (34, 36) on the tool spindle (22).

4. Machine tool according to any of the preceding claims, wherein the slotted guide (52, 82, 84) is arranged and configured such that it is symmetrical with respect to a symmetry line (76) extending through the longitudinal axis (23) of the tool spindle (22) between the two reversal points (74, 75) of the coupling element (46).

5. Machine tool according to any of the preceding claims, wherein the slotted guide (52) is interchangeable.

6. Machine tool according to any of the preceding claims, wherein a ball bearing (48) is accommodated on the eccentric element (30), the ball bearing being held on its outer side in the fork-shaped coupling element (46).

7. Machine tool according to any of the preceding claims, wherein means (59) are provided for moving the guide element (50) and the slotted guide (52) between an engagement position, in which the guide element (50) is guided in the slotted guide (52) for producing the superimposed movement, and an inactive position, in which the guide element (50) is disengaged from the slotted guide (52) and also a linear mobility is blocked.

8. Machine tool according to any of the preceding claims, wherein means (80) are provided for bringing the guide element (50, 50c) into engagement with different slotted guides (82, 84) or with different sections (74, 76, 78) of a slotted guide (52b) to produce differing superimposed movements.

9. Machine tool according to claim 7 or 8, wherein the slotted guide (52b) is displaceable along its extension direction.

10. Machine tool according to any of the preceding claims, wherein the tool spindle (22) is secured against displacement in axial direction.

11. Machine tool according to any of the preceding claims, wherein the tool spindle (22) protrudes outwardly from the housing (12) and is sealed in the region of its exit point from the housing by a membrane (53) made from an elastomer material.

12. Machine tool according to any of the preceding claims, wherein the slotted guide (52, 52b, 62, 82, 84) is designed such that the superimposed linear movement that is perpendicular to the longitudinal axis (23) of the tool spindle (22) has a maximum deflection when the coupling element (46, 46a) is located in a middle position between the two reversal points (74, 75) of the oscillating movement.

13. Machine tool according to any of the preceding claims, wherein the tool spindle (22) at its free end has a tool holder (24) for securing a tool (64), in particular a sawing tool or a grinding tool.

## Revendications

1. Machine-outil à entraînement oscillant avec un boîtier (12), dans laquelle un moteur (26) est reçu avec un arbre moteur (28), au niveau duquel un élément à excentrique (30, 30a) est reçu, avec une tête de broche (20), avec une broche d'outil (22) logée de manière à pouvoir tourner dans la tête de broche (20) autour de son axe longitudinal (23), au niveau de laquelle un élément de couplage (46, 46a) est reçu sans pouvoir tourner, lequel coagit avec l'élément à excentrique (30, 30a) pour la génération d'un mouvement oscillant autour de son axe longitudinal (23) de la broche d'outil (22), **caractérisée en ce que** pour l'introduction d'un mouvement superposé, supplémentaire par rapport au mouvement oscillant, divergeant de celui-ci, dans l'élément de couplage (46, 46a) un guidage de coulisse (52, 52b, 82, 84) est prévu, dans lequel l'élément de couplage (46) est guidé pour la génération du mouvement superposé au moyen d'un élément de guidage (50, 50c), ou que l'élément à excentrique est réalisé comme tête sphérique (30a) qui est guidée dans un guidage de coulisse intérieur (62) dans l'élément de couplage (46a).

2. Machine-outil selon la revendication 1, dans laquelle la broche d'outil (22) est logée de manière à pouvoir tourner dans le boîtier (12) de préférence dans la zone de ses deux extrémités au moyen de deux paliers (34, 36) et est logée de manière mobile linéairement en outre perpendiculairement à l'axe longitudinal (23).

3. Machine-outil selon la revendication 1, dans laquelle l'élément de couplage (46, 46a) est un levier qui est fixé entre les deux paliers (34, 36) sur la broche d'outil (22).

4. Machine-outil selon l'une quelconque des revendications précédentes, dans laquelle le guidage de coulisse (52, 82, 84) est agencé et réalisé de telle manière qu'il soit symétrique par rapport à une ligne de symétrie (76) s'étendant entre les deux points d'inversion (74, 75) de l'élément de couplage (46) à travers l'axe longitudinal (23) de la broche d'outil (22).

5. Machine-outil selon l'une quelconque des revendications précédentes, dans laquelle le guidage de coulisse (52) est agencé de manière interchangeable.

6. Machine-outil selon l'une quelconque des revendications précédentes, dans laquelle un palier (48) bombé est reçu sur l'élément à excentrique (30), lequel est maintenu au niveau de son côté extérieur dans l'élément de couplage (46) réalisé en forme de fourche.

7. Machine-outil selon l'une quelconque des revendications précédentes, dans laquelle des moyens (59) sont prévus afin de déplacer l'élément de guidage (50) et le guidage de coulisse (52) entre une position de mise en prise, dans laquelle l'élément de guidage (50) est guidé dans le guidage de coulisse (52) pour la génération du mouvement superposé, et une position inactive, dans laquelle l'élément de guidage (50) est hors prise du guidage de coulisse (52) et une mobilité linéaire est de plus bloquée.

8. Machine-outil selon l'une quelconque des revendications précédentes, dans laquelle des moyens (80) sont prévus afin d'amener en prise l'élément de guidage (50, 50c) avec différents guidages de coulisse (82, 84) ou avec différentes sections (74, 76, 78) d'un guidage de coulisse (52b) afin de générer différents mouvements superposés.

9. Machine-outil selon la revendication 7 ou 8, dans laquelle le guidage de coulisse (52b) est mobile le long de son sens d'étirement.

10. Machine-outil selon l'une quelconque des revendications précédentes, dans laquelle la broche d'outil (22) est bloquée contre un déplacement dans le sens axial.

11. Machine-outil selon l'une quelconque des revendications précédentes, dans laquelle la broche d'outil (22) dépasse du boîtier (12) vers l'extérieur et est rendue étanche dans la zone de son point de sortie du boîtier avec une membrane (53) en un matériau élastomère.

12. Machine-outil selon l'une quelconque des revendications précédentes, dans laquelle le guidage de coulisse (52, 52b, 62, 82, 84) est réalisé de telle manière que le mouvement linéaire, superposé perpendiculairement à l'axe longitudinal (23) de la broche d'outil (22) présente une déviation maximale lorsque l'élément de couplage (46, 46a) se trouve dans une position médiane entre les deux points d'inversion (74, 75) du mouvement d'oscillation.

13. Machine-outil selon l'une quelconque des revendications précédentes, dans laquelle la broche d'outil (22) présente au niveau de son extrémité libre un logement d'outil (24) pour la fixation d'un outil (64), en particulier un outil de sciage ou de meulage.
